# EUROPÄISCHE PATENTSCHRIFT

(11) **EP 4 771 291 B1**
(45) Veröffentlichungstag und Bekanntmachung des Hinweises auf die Patenterteilung: **12.08.2026**
(21) Anmeldenummer: 25766229.6
(22) Anmeldetag: 09.09.2025
(51) Int. Cl.: F16B 43/00, F16B 2/00, F16B 39/24

(54) **SICHERUNGSSCHEIBE**
LOCK WASHER
RONDELLE DE BLOCAGE

(30) Priorität: 19.09.2024 DE 202024001799 U
(43) Veröffentlichungstag der Anmeldung: 08.07.2026
(73) Patentinhaber: Heico Befestigungstechnik GmbH, 59469 Ense-Niederense (DE)
(72) Erfinder: VORNWEG, Stefan, 59457 Werl (DE); LUTTER, Frank, 59514 Welver-Stocklarn (DE)
(74) Vertreter: Haverkamp Patentanwälte PartG mbB
(86) Internationale Anmeldenummer: PCT/EP2025/075532
(87) Internationale Veröffentlichungsnummer: WO 2026/061814

(56) Entgegenhaltungen:
- DE-U1- 202012 104 410
- US-A1- 2021 372 442

## Beschreibung

Gegenstand der Erfindung ist eine Sicherungsscheibe zum Sichern einer Schraubverbindung, wobei die Sicherungsscheibe eine erste Flachseite und eine zweite Flachseite aufweist und wenigstens eine der beiden Flachseiten der Sicherungsscheibe eine durch eine Vielzahl an Radialrippen zur Ausbildung eines Formschlusses mit einem Widerlanger dienenden bereitgestellte Verklammerungsstrukturierung aufweist.

Schraubverbindungen müssen vielfach gegen ein ungewolltes Losdrehen gesichert sein, insbesondere solche, die dynamisch beansprucht sind. Zu diesem Zweck werden Sicherungsscheiben eingesetzt, die entweder durch Verklammerungsstrukturierungen strukturiert oder Verklammerungsstrukturierungen auf zumindest einer der beiden Flachseiten tragen. Diese Verklammerungsstrukturierungen dienen dem Zweck, dass sich diese beim Spannen einer Schraubverbindung zumindest teilweise in die Oberfläche des daran angrenzenden Widerlagers, beispielsweise der Unterseite eines Schraubenkopfes oder eines Teils einer Spannanordnung eindrücken und in die Oberfläche des Widerlagers formschlüssig eingreifen. Neben Sicherungsscheiben, die aus Federstahl hergestellt sind und durch Einschnitte gebildete und gegenüber der Scheibenebene ausgestellte Verklammerungselemente aufweisen, sind auch solche bekannt, bei denen zumindest eine Flachseite durch eine Prägung ausgebildete Verklammerungsstrukturierungen aufweist. Bei durch Prägung hergestellten Verklammerungsstrukturierungen vorbekannter Sicherungsscheiben handelt es sich um Radialrippen, die von der zu diesen benachbarte Oberfläche der Sicherungsscheibe abragen. Bekannt ist auch, eine solche die Verklammerungsstrukturierungen tragende Flachseite durch eine Vielzahl derartiger Rippen, die jeweils einen radialen Verlauf haben, zu strukturieren, wobei diese Rippen in Umfangsrichtung gesehen eine asymmetrische Querschnittsgeometrie aufweisen.

Radialrippen sind Verklammerungsstrukturen mit einer Erstreckung in radialer Richtung der Sicherungsscheibe. Gebildet wird hierdurch eine in Einschraubrichtung gerichtete Verklammerungskante. Im Zuge des Einschraubvorganges wird diese in das Widerlager, also beispielsweise in die Unterseite eines Schraubenkopfes, zur Ausbildung eines Formschlusses eingedrückt, sodass ein Lösen nur gegen die entgegen gerichtete Verklammerungskante möglich ist. Damit eine solche Verklammerungsstrukturierung bei dem Vorgang des Spannens der Schraubverbindung in die Oberfläche eines Widerlagers eingedrückt wird, ist entweder die gesamte Sicherungsscheibe aus einem gegenüber dem Widerlager härteren Werkstoff oder zumindest die Oberfläche der Scheibe mit der Oberfläche der Verklammerungsstrukturierung gehärtet und somit härter als das Material, in das die Verklammerungsstrukturierung zum Bewirken der gewünschten Losdrehsicherung eingedrückt werden soll.

Sicherungsscheiben, die an ihrer einen Flachseite Radialrippen als Verklammerungsstrukturierungen aufweisen, können, wenn diese zur Verwendung in einem Keilsicherungsscheibenpaar vorgesehen sind, auf ihrer anderen Scheibenfläche Keilflächen tragen.

Bei derartigen Sicherungsscheiben dient die Verklammerungsstrukturierung dem Zweck, einen Formschluss mit dem daran anliegenden Teil einer Spannverbindung auszubilden. Bei Keilsicherungsscheiben ist es beispielsweise gewünscht, dass beim Spannen der Spannverbindung sich diejenige Keilsicherungsscheibe, die an dem ruhenden Teil der Spannverbindung anliegt, bereits zu Beginn des Spannprozesses mit ihrer Verklammerungsstrukturierung in das Material des anliegenden Teils eindrückt, um auf diese Weise einen Formschluss bereitzustellen und somit zu verhindern, dass die Keilsicherungsscheibe beim Spannvorgang mitdreht. Um dieses zu optimieren, wird in US 2021/372442 A1 vorgeschlagen, dass sich die Radialrippen nur in einem in radialer Richtung begrenzten Ringabschnitt auf der Sicherungsscheibe befinden, um eine Kraftkonzentration mit dem Ziel zu erreichen, dass bereits bei einer geringen anliegenden Spannkraft sich diese Radialrippen in die Oberseite des daran anliegenden Teils der Spannverbindung eindrücken. Mitunter genügt der auf diese Weise bereitgestellte Formschluss allerdings nicht den Anforderungen, die an eine Spannverbindung unter Einschaltung einer solchen Sicherungsscheibe bzw. eines solchen Sicherungsscheibenpaares in Bezug auf das Losbrechmoment gestellt sind.

Ausgehend von diesem diskutierten Stand der Technik liegt der Erfindung daher die Aufgabe zugrunde, eine Sicherungsscheibe der eingangs genannten Art vorzuschlagen, mit der sowohl bereits bei geringem anliegendem Drehmoment ein Formschluss mit dem an der Verklammerungsstrukturierung anliegenden Teil herstellbar ist, die jedoch auch den Anforderungen an ein hohes Losbrechmoment genügt.

Gelöst wird diese Aufgabe erfindungsgemäß durch eine eingangs genannte, gattungsgemäße Sicherungsscheibe, bei der eine erste Anzahl an Radialrippen eine erste Höhe und eine zweite Anzahl an Radialrippen eine zweite Höhe aufweisen, wobei die zweite Höhe geringer ist als die erste Höhe, und bei der die Radialrippen der ersten Anzahl einzeln oder zu mehreren gruppiert durch wenigstens eine Radialrippe der zweiten Anzahl voneinander getrennt sind.

Als Radialrippen sind im Rahmen dieser Ausführungen solche rippenartigen Verklammerungsstrukturen zu verstehen, die eine Erstreckung in radialer Richtung der Flachseite der Sicherungsscheibe haben und durch die ein Formschluss mit der Oberfläche eines Widerlagers in einer Querrichtung zur radialen Erstreckung einer solchen Verklammerungsstruktur bereitgestellt ist. Daher erfasst dieser Begriff auch Verklammerungsstrukturen, die keinen geraden radialen Verlauf aufweisen, sondern in Verlaufsrichtung gekrümmt oder anderweitig strukturiert sein können.

Bei dieser Sicherungsscheibe sind die zur Ausbildung eines Formschlusses mit einem Widerlager dienenden Radialrippen in Umfangsrichtung gesehen mit unterschiedlicher Höhen ausgeführt. Eine erste Anzahl an Radialrippen weist eine erste Höhe auf, während eine zweite Anzahl an Radialrippen eine zweite Höhe aufweist, die jedoch geringer ist als die erste Höhe. Die Höhe einer Radialrippe bemisst sich durch den Abstand des Höchsten einer solchen Radialrippe von der benachbarten Vertiefung. Das Tiefste der zwei Radialrippen trennenden Vertiefung befindet sich vorzugsweise in einer gemeinsamen Scheibenebene. Eine oder mehrere Radialrippen der ersten Anzahl sind in einer Wechselfolge mit einer oder mehreren radialen Rippen der zweiten Anzahl angeordnet, sodass umfänglich die die Verklammerungsstrukturierung aufweisende Flachseite der Sicherungsscheibe gleichmäßig auf die Oberfläche eines angrenzenden Teils, beispielsweise eines ersten Bauteils einer Spannanordnung anliegt. Dadurch, dass nur eine Teilmenge der Radialrippen zu Beginn eines Spannvorganges an der Oberfläche des an die Sicherungsscheibe angrenzenden Bauteils anliegt, erfolgt eine Konzentration der durch das anliegende Drehmoment bewirkten Spannkraft auf diese Teilmenge der Radialrippen. Diese können demzufolge bereits bei einer deutlich geringeren, auf die Sicherungsscheibe wirkenden Spannkraft in die Oberfläche des anliegenden Teils eingedrückt werden, verglichen mit einer herkömmlichen Auslegung einer solchen Sicherungsscheibe, bei der die Radialrippen in Umfangsrichtung gesehen alle dieselbe Höhe aufweisen. Die Radialrippen der zweiten Anzahl oder für den Fall, dass die zweite Anzahl an Radialrippen wiederum Radialrippen unterschiedlicher Höhe aufweist, diejenigen mit der größten Höhe aus dieser Anzahl werden in die Oberfläche des anliegenden Teils erst eingedrückt, wenn die Radialrippen der ersten Anzahl bereits einen Formschluss mit dem angrenzenden Bauteil gebildet haben, wobei diese so weit eingedrückt worden sind, dass bei Anliegen einer höheren Spannkraft dann auch die nächst höheren Radialrippen der zweiten Anzahl zur Verstärkung des Formschlusses in das Material eingedrückt werden. Damit wird mit zunehmender Spannkraft über eine zunehmende Anzahl an Radialrippen der Formschluss verstärkt. Bei einer solchen Sicherungsscheibe kann die gesamte radiale Erstreckung der Flachseite der Sicherungsscheibe zur Ausbildung der Radialrippen und somit für den Formschluss genutzt werden. Dieser in Umfangsrichtung der Sicherungsscheibe gebildete Formschluss ist sehr viel wirksamer als ein durch Radialrippen gebildeter Formschluss, die sich nur über einen eher kleineren Abschnitt der radialen Erstreckung der Sicherungsscheibe erstrecken. Infolge einer Trennung der Radialrippen oder von gruppierten Radialrippen der ersten Anzahl voneinander durch Zwischenschalten von einer oder mehreren Radialrippen der zweiten Anzahl ist die Gefahr eines Abscherens von Material des anliegenden Teils bei Anliegen eines entsprechenden Losdrehmomentes deutlich reduziert.

Von besonderem Vorteil ist bei dieser Art der Verklammerungsstrukturierung einer Flachseite der Sicherungsscheibe auch, dass in mehreren Schritten sukzessive bei steigender Spannkraft zusätzliche Radialrippen für den gewünschten Formschluss mit dem an der Verklammerungsstrukturierung anliegenden Teil genutzt werden können. Durchaus möglich ist es, dass neben den Radialrippen der ersten Anzahl mit ihrer größten Höhe zwischen diesen Radialrippen der zweiten Anzahl mit in Umfangsrichtung gesehen gestufter Höhe vorgesehen sein können. Bei einer solchen Ausgestaltung folgt in Umfangsrichtung gesehen auf eine Radialrippe der ersten Anzahl eine solche der zweiten Anzahl, und zwar eine solche, die innerhalb der zweiten Anzahl die größte Höhe hat. Auf diese wiederum kann eine weitere Radialrippe der zweiten Anzahl folgen, die eine geringere Höhe hat als die in der Abfolge vorangegangene. Bei einer solchen gestuften Ausbildung ist Sorge dafür getragen, dass die in ihrer Höhe geringeren Radialrippen erst dann für den Formschluss genutzt werden, wenn die Radialrippen mit der größeren Höhe bereits mit einer gewissen Eindringtiefe in das angrenzende Teil eingepresst worden sind. Auf diese Weise wird mit zunehmender Spannkraft und somit mit höheren, auf das Spannmittel, beispielsweise einen Bolzenkopf oder eine Mutter wirkenden Drehmoment der Formschluss durch zunehmend mehr Radialrippen, die in das angrenzende Material eingepresst werden, verbessert. Zugleich wird die Eindringtiefe der eine größere Höhe aufweisenden Radialrippen erhöht.

Die Höhenunterschiede zwischen den unterschiedlichen Höhen der Radialrippen brauchen nicht übermäßig groß zu sein. Bereits ein Höhenunterschied von wenigen Hundertstel Millimetern, beispielsweise 2/100 - 3/100 mm, ist ausreichend, um in den Genuss der Vorteile dieser Sicherungsscheibe zu kommen.

Die Verklammerungsstrukturierung dieser Sicherungsscheibe kann ganz gezielt an den zu erreichenden Sicherungszweck angepasst sein. Beispielsweise kann die Anzahl der Radialrippen der ersten Anzahl geringer sein als diejenige der Radialrippen der zweiten Anzahl. Auf diese Weise lässt sich sehr gut die notwendige Kraft einstellen, mit der die Sicherungsscheibe zum Erreichen eines ersten Formschlusses zum Vermeiden eines Mitdrehens beim Spannen in das daran anliegende Material eingedrückt wird. Auch kann die Höhendifferenz zwischen den Radialrippen der ersten Anzahl größer sein als die Höhendifferenz von Radialrippen der zweiten Anzahl, wenn in dieser zweiten Anzahl Radialrippen mit unterschiedlicher Höhe zusammengefasst sind.

Sind in der zweiten Anzahl an Radialrippen solche unterschiedlicher Höhe zusammengefasst, kann die Abfolge der bezüglich ihrer Höhe unterschiedlichen Radialrippen in beide Umfangsrichtungen der Sicherungsscheibe gesehen gleich ausgelegt sein.

Grundsätzlich ist bevorzugt, dass die Radialrippen mit ihrer unterschiedlichen Höhe in Umfangsrichtung auf der die Verklammerungsstrukturierung tragenden Flachseite der Sicherungsscheibe gleichmäßig verteilt angeordnet sind.

Die Radialrippen können in radialer Richtung einen geraden Verlauf aufweisen. Auch besteht die Möglichkeit, dass die Radialrippen in ihrer radialen Erstreckung einen in Sicherungsrichtung gerichteten Scheitel aufweisen, beispielsweise in dieser Richtung gekrümmt sind. Beispiele der Geometrie derartiger Verklammerungsstrukturierungen sind in DE 20 2012 104 410 U1 der Anmelderin offenbart. Durch diese explizite Bezugnahme auf die Geometrie dieser vorbekannten Verklammerungsstrukturierungen werden diese bezüglich ihrer Geometrie hier zugleich zum Gegenstand dieser Ausführungen gemacht.

Gemäß einem bevorzugten Ausführungsbeispiel ist die Querschnittsfläche der Radialrippen asymmetrisch ausgeführt, wobei die steilere Flanke in die gewünschte Sicherungsrichtung weist.

Die vorbeschriebene Verklammerungsstrukturierung der Sicherungsscheibe kann durch weitere Maßnahmen zur initialen Spannkraftkonzentration genutzt werden. In einem Ausführungsbeispiel einer solchen Sicherungsscheibe weist diese in einem radial äußeren Ringabschnitt eine größere Materialstärke auf, als in einem radial innenliegenden Ringabschnitt.

Damit liegt diese Sicherungsscheibe mit der die Verklammerungsstrukturierung tragenden Flachseite zu Beginn eines Spannvorganges nur mit dem radial äußeren Ringabschnitt auf der Oberfläche des daran angrenzenden Teils an. Insofern erfolgt bei dieser Sicherungsscheibe beim Spannen einer Spannverbindung unter Einschaltung einer solchen Sicherungsscheibe zusätzlich eine Spannkraftkonzentration auf diesen radial äußeren Ringabschnitt. Mit zunehmender Spannkraft werden dann auch die weiter innen liegenden Radialrippenabschnitte in das Material des angrenzenden Teils eingedrückt. Die Abnahme der Materialstärke von dem radial äußeren Ringabschnitt zu dem innenliegenden Ringabschnitt erfolgt vorzugsweise kontinuierlich. Eine solche Reduzierung der Materialstärke kann durch eine Reduzierung der Höhe der Radialrippen ebenso vorgesehen sein, wie durch eine Reduzierung der Materialstärke bei gleichbleibender Höhe der Radialrippen.

Bei der erfindungsgemäßen Sicherungsscheibe kann es sich beispielsweise um eine Keilsicherungsscheibe handeln. Die der Verklammerungsstrukturierung gegenüberliegende Flachseite ist dann durch Keilflächen strukturiert. Typischerweise wird eine derartige Sicherungsscheibe zusammen mit einer weiteren solchen Sicherungsscheibe als Paar und somit als Keilsicherungsscheibenpaar benutzt werden, bei dem die die Keilflächen tragenden Flachseiten miteinander in Eingriff gestellt sind.

In einer Weiterbildung eines solchen Keilsicherungsscheibenpaares ist vorgesehen, dass die beiden Sicherungsscheiben (Keilsicherungsscheiben) einen unterschiedlichen Außendurchmesser aufweisen. Die im Durchmesser größere Sicherungsscheibe trägt die vorbeschriebene Verklammerungsstrukturierung an ihrer von der im Durchmesser kleineren Keilsicherungsscheibe wegweisenden Flachseite. Die im Durchmesser größere Sicherungsscheibe verfügt vorzugsweise über eine radial außenseitig vorgesehene Drehmitnahmekontur. Diese dient zur Drehmomentabstützung eines Spannwerkzeuges. Die von der im Durchmesser größeren Sicherungsscheibe kleinere Sicherungsscheibe kann an ihrer Außenseite ebenfalls eine gleichartige Verklammerungsstrukturierung tragen.

Eine solche Sicherungsscheibe ist unabhängig von ihrer Konzeption, ob als Keilsicherungsscheibe ausgelegt oder nicht, typischerweise durch einen Stanz-PressProzess aus einem Fe-Metall, insbesondere Stahl oder Edelstahl hergestellt. Sollte es erforderlich sein, kann die Sicherungsscheibe entweder insgesamt oder zumindest mit ihrer die Verklammerungsstrukturierung tragenden Flachseite gehärtet sein.

Nachfolgend ist die Erfindung anhand eines Ausführungsbeispiels unter Bezugnahme auf die beigefügten Figuren beschrieben. Es zeigen:
- **Fig.1:**: Eine perspektivische Ansicht eines als Keilsicherungsscheibenpaar ausgeführten Sicherungsscheibenpaares, deren Sicherungsscheiben an ihren voneinander wegweisenden Flachseiten mit der erfindungsgemäßen Verklammerungsstrukturierung ausgerüstet sind,
- **Fig.2:**: eine vergrößerte Seitenansicht der in Figur 1 oberen Sicherungsscheibe in einer Abwicklung,
- **Fig. 3:**: eine Querschnittsdarstellung des Keilsicherungsscheibenpaares der Figur 1 und
- **Fig. 4:**: eine vergrößerte Ausschnittsdarstellung des Querschnittes der Figur 4.

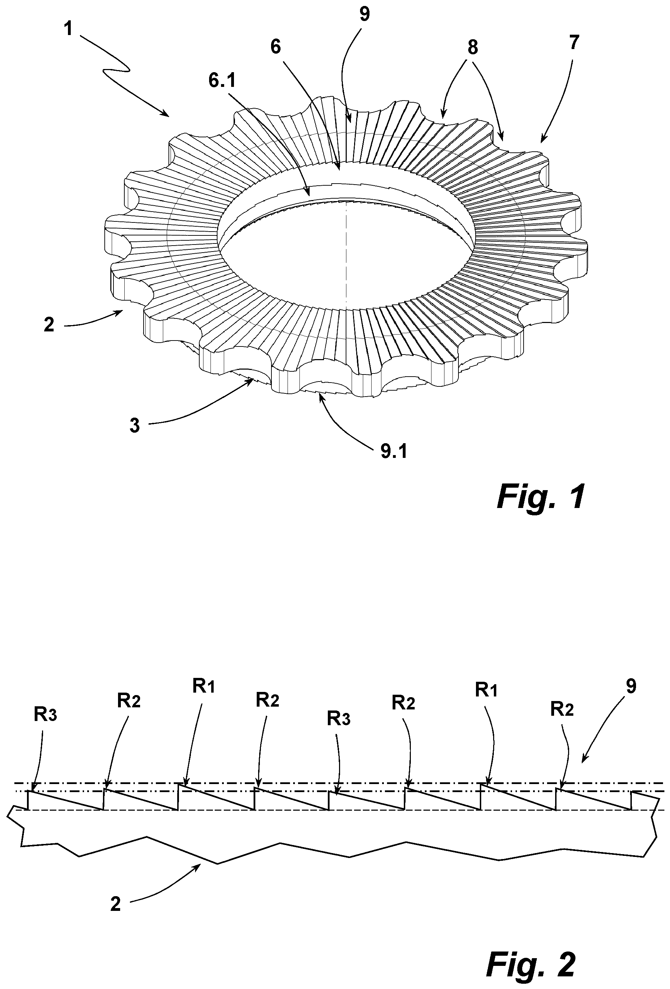

Ein Keilsicherungsscheibenpaar 1 verfügt über zwei einzeln hergestellte Keilsicherungsscheiben 2, 3. Jede der beiden Keilsicherungsscheiben 2, 3 trägt an ihrer zu der anderen Keilsicherungsscheibe 3 bzw. 2 weisenden Seite die für derartige Keilsicherungsscheiben typische Keilflächenstrukturierung mit Keilflächen. Die Keilflächen erstrecken sich über die gesamte radiale Erstreckung der jeweiligen Keilsicherungsscheibe 2, 3. Die Keilflächenstrukturierung der beiden Keilsicherungsscheiben 2, 3 ist ausgelegt, wie dieses für Keilsicherungsschreiben an sich bekannt ist. Die Keilflächenstrukturierung ist in radialer Richtung nicht verjüngt. Die Orientierung der Keilflächen ist so ausgelegt, dass die kurzen Flanken in Spannbewegungsrichtung (hier: rechtsdrehend) aneinander anstoßen. Die durch die Keilflächenstrukturierung gebildeten Scheitel als Positivstrukturen der Keilflächenstrukturierung befinden sich in Bezug auf ihre radiale Erstreckung jeweils in einer Ebene. Beide Keilsicherungsscheiben 2, 3 verfügen über eine Befestigeröffnung 6, 6.1. Die beiden Keilsicherungsscheiben 2, 3 sind bezüglich ihrer Befestigeröffnung 6, 6.1 fluchtend mit ihren Keilflächen zueinander weisenden und in der in Figur 1 gezeigten Stellung zueinander bei dem dargestellten Ausführungsbeispiel durch eine Klebeverbindung miteinander verbunden. Die Klebeverbindung ist so ausgelegt, dass diese bei einer Scherbeanspruchung nachgibt oder bricht. Eine solche Scherbeanspruchung tritt auf, wenn zumindest eine der beiden Keilsicherungsscheiben 2, 3 entgegen der Spannrichtung bewegt wird. Damit bleibt trotz adhäsiver Verbindung der beiden Keilsicherungsscheiben die Keilsicherungsscheibenfunktionalität erhalten.

Die Keilsicherungsscheibe 2 hat einen größeren Außendurchmesser als die Keilsicherungsscheibe 3. Ihr äußerer radialer Abschluss ist durch eine Drehmitnahmekontur 7 strukturiert. Die Drehmitnahmekontur 7 des dargestellten Ausführungsbeispiels ist nach Art einer Zahnung ausgeführt. Die Negativstrukturen 8 dienen zum Eingreifen einer Drehmomentstütze eines Spannwerkzeuges. Damit übernimmt die Keilsicherungsscheibe 2 diesbezüglich die Funktionalität einer Reaktionsscheibe. Reaktionsscheiben sind an sich bekannt und brauchen daher im Rahmen dieser Ausführungen nicht näher erläutert zu werden.

Beide Keilsicherungsscheiben 2, 3 tragen an ihrer voneinander wegweisenden Flachseite jeweils Verklammerungsstrukturierungen 9, 9.1. Bei dem dargestellten Ausführungsbeispiel handelt es sich bei den Verklammerungsstrukturierungen 9, 9.1 um Radialrippen, und zwar bei dem dargestellten Ausführungsbeispiel solche mit einer asymmetrischen Querschnittsgeometrie. Die flacheren Flanken dieser Radialrippen sind gegensinnig zu den Keilflächen auf der anderen Scheibenseite ausgerichtet. Während die Verklammerungsstrukturierung 9 dem Zweck dient, beim Spannen einer Spannanordnung, in die das Keilsicherungsscheibenpaar 1 eingeschaltet ist, in die Materialoberfläche des daran anliegenden Bauteils eingepresst und damit eingeprägt zu werden, dient die Verklammerungsstrukturierung 9.1 der Keilsicherungsscheibe 3 zur Bereitstellung reibungserhöhender Mittel, durch die ein Lösen des daran anliegenden Spann- oder Widerlagers, also einer Spannmutter, ein Bolzenkopf oder ein Bauteil erschwert ist. Dieses schließt nicht aus, dass auch diese in das Material des Gegenlagers eingeprägt werden kann.

Nachfolgend ist unter Bezugnahme auf Figur 2 die Verklammerungsstrukturierung 9 der im Durchmesser größeren Keilsicherungsscheibe 2 erläutert. Die Verklammerungsstrukturierung 9.1 der im Durchmesser kleineren Keilsicherungsscheibe 3 ist genauso ausgeführt, nur weist die kürzere Flanke dieser Verklammerungsstrukturierung 9.1 in die entgegengesetzte Richtung. Die Verklammerungsstrukturierung 9 ist durch in ihrer Höhe unterschiedlich ausgebildete Radialrippen R₁, R₂, R₃ gebildet. Die Radialrippen R₁ sind diejenigen mit der größten Höhe. Die Höhe der Radialrippen R₁ ist in Figur 2 durch die strichpunktierte Linie angedeutet. Der außenseitige Abschluss der Radialrippen R₁ befindet sich in einer gemeinsamen Scheibenebene. Die Radialrippen R₂, R₃ weisen eine geringere Höhe auf und sind die Radialrippen der zweiten Anzahl zugehörig. Die zweite Anzahl der Radialrippen ist in die Radialrippen R₂ und R₃ unterteilt, wobei diese Radialrippen R₂, R₃ eine unterschiedliche Höhe aufweisen. Die Radialrippen R₂, R₃ der zweiten Anzahl weisen eine geringere Höhe auf als die Radialrippen R₁. Die Radialrippen R₂ weisen aus der Gruppe der Radialrippen der zweiten Anzahl die größere Höhe auf. Die Höhe der Radialrippen R₁, R₂, R₃ bemisst sich von der gemeinsamen Basis (in Figur 2 gestrichelt dargestellt). Somit liegt das Tiefste zwischen zwei benachbarten Radialrippen in einer gemeinsamen Scheibenebene. Die in Figur 2 gezeigte Abwicklung einer Seitenansicht der Sicherungsscheibe 2 zeigt, dass benachbart zu einer Radialrippe R₁ in beiden Richtungen jeweils eine Radialrippe der zweiten Anzahl, und zwar eine Radialrippe R₂ angeordnet ist. Auf diese folgt eine Radialrippe R₃, mithin eine Radialrippe mit der geringsten Höhe. Diese Wechselfolge ist in Umfangsrichtung gesehen in beiden Richtungen dieselbe und erstreckt sich über den gesamten Umfang der Keilsicherungsscheibe 2. Zur Illustration des Höhenunterschiedes ist in Figur 2 ebenfalls das Höhenniveau der Radialrippen R₃ kenntlich gemacht (Strich-Zweipunkt-Signatur).

Bei der Keilsicherungsscheibe 3, die bei dem dargestellten Ausführungsbeispiel die im Durchmesser kleinere Keilsicherungsscheibe ist, sind die beiden Flachseiten in parallelen Ebenen angeordnet. Dies bedeutet, dass die Verklammerungsstrukturierungen 9.1 über ihre radiale Erstreckung eine gleiche Höhe aufweisen.

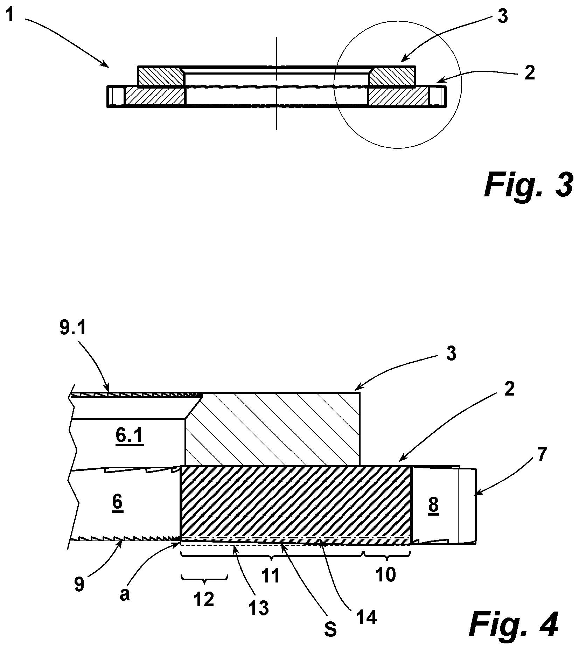

Auch wenn die Keilsicherungsscheibe 2, die bei dem dargestellten Ausführungsbeispiel die im Durchmesser größere ist, die Scheitel 5 der Keilflächenstrukturierung in einer Ebene liegen, ist die gegenüberliegende Flachseite dieser Keilsicherungsscheibe 2 bezüglich der Höhe der Verklammerungsstrukturierungen 9 in radialer Richtung unterschiedlich ausgeführt. Die Höhe der als Verklammerungsstrukturierungen 9 dienenden Radialrippen nimmt in radialer Richtung von außen nach innen in Richtung zu der Befestigeröffnung 6 hin ab. Dargestellt ist dieses in der Detaildarstellung der Figur 4. In einem äußeren radialen Scheibenbereich 10 ist die Höhe einer solchen Radialrippe gleichbleibend. In dieser Figur ist der Scheitel der im Schnitt gezeigten Radialrippe mit dem Bezugszeichen S kenntlich gemacht. In dem in radialer Richtung innenseitig an den Scheibenbereich 10 angrenzenden Scheibenbereich 11 nimmt die Höhe der Radialrippen in Richtung zur Befestigeröffnung 6 hin ab. Damit befindet sich der äußere radiale Scheibenbereich 10 wenn auch mit kleinen, aber gewissen axialen Abstand (Abstand in axialer Richtung) von dem inneren Scheibenbereich 12. Dieser Abstand ist in dieser Figur mit "a" kenntlich gemacht. Kontaktiert die Keilsicherungsscheibe 2 mit ihrer Verklammerungsstrukturierung 9 die Oberfläche eines Bauteils, liegt diese nur mit dem radial äußeren Scheibenbereich 10 an der Oberfläche des Bauteils an. In der Figur 4 endet dieser Scheibenbereich 10 in radialer Richtung nach außen aufgrund der Lage des gezeigten Schnittes in dem Scheitel einer Negativstruktur 8 der Drehmitnahmekontur 7. In den Abschnitten der Keilsicherungsscheibe 2, in denen die Positivstrukturen der Drehmitnahmekontur 7 angeordnet sind, erstreckt sich dieser äußere Scheibenbereich 10 bis in den Bereich des radial äußeren Abschlusses der Keilsicherungsscheibe 2.

In Figur 4 ist mit gestrichelter Linie 13 die Spur der Fortsetzung des innerhalb des radial äußeren Scheibenbereiches 10 auf gleicher Höhe befindlichen Abschnittes des Scheitels S der gezeigten Radialrippe kenntlich gemacht. Eingetragen ist in diese Figur ferner mit strichpunktierter Linie 14 die Tiefenlinie der Radialrippe; mithin definiert die Linie 14 diejenige virtuelle Scheibenoberfläche, die unstrukturiert verbleibt.

Den Schnittdarstellungen der Figuren 3 und 4 ist zu entnehmen, dass die radiale Erstreckung der im Durchmesser kleineren Keilsicherungsscheibe 3 ausgehend von den fluchtend zueinander angeordneten Befestigeröffnungen 6, 6.1 sich in etwa der radialen Erstreckung des Bereiches 11 der Keilsicherungsscheibe 2 erstreckt und somit in etwa bis an den radial äußeren Scheibenbereich 10 heranreicht.

Beide Keilsicherungsscheiben 2, 3 sind aus einem Stahlmaterial hergestellt. Zumindest die beiden Flachseiten, typischerweise jedoch die Keilsicherungsscheiben 2, 3 vollständig sind mit einer Zinklamellenbeschichtung ausgerüstet. Die beiden Keilsicherungsscheiben 2, 3 sind in einem ersten Herstellungsschritt aus einer Platine ausgestanzt. Durch den Stanzprozess wird die äußere Formgebung der beiden Keilsicherungsscheiben 2, 3 bereitgestellt. Dieses beinhaltet ebenfalls die Bereitstellung der Befestigeröffnungen 6, 6.1. Die Strukturierung der Flachseiten erfolgt durch einen nachfolgend durchgeführten Pressprozess, wobei die Strukturierung auf beiden Flachseiten jeder Keilsicherungsscheibe 2, 3 in einem einzigen Pressschritt erzeugt wird. Dieses erfolgt in einer mit entsprechenden Formwerkzeugen ausgerüsteten Presse. Hierdurch wird Oberflächenmaterial des ausgestanzten Pressrohlings umgeformt, um auf der einen Flachseite die Keilflächenstrukturierung und auf der anderen Flachseite die jeweilige Verklammerungsstrukturierungen 9, 9.1 auszubilden. Dieses Umformen führt zu einer Kaltverfestigung der erzeugten Strukturen, was vor allem für die Verklammerungsstrukturierungen 9, 9.1 von Vorteil ist, da diese somit durch diesen Umformprozess nicht nur ausgebildet, sondern zugleich gegenüber dem übrigen Material der jeweiligen Keilsicherungsscheibe 2, 3 verhärtet sind. Die Zinklamellenbeschichtung ist naturgemäß erst nach fertiger Formgebung auf jeder Keilsicherungsscheibe 2 bzw. 3 aufgetragen worden. Bei dem dargestellten Ausführungsbeispiel sind die durch Prägen strukturierten Scheiben durch eine Wärmebehandlung gehärtet worden. Die Scheibe ist damit insgesamt gehärtet und ist in eine Härte gebracht worden, die diejenige, die lediglich durch Kaltverfestigung erzeugt werden kann, deutlich überschreitet. In einem nachfolgenden Schritt sind die beiden Keilsicherungsscheiben 2, 3 jeweils mit ihrer die Keilflächenstrukturierung tragenden Flachseite zueinander weisend durch eine Klebeverbindung miteinander verbunden worden.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Keilsicherungsscheibenpaar
- 2: Keilsicherungsscheibe
- 3: Keilsicherungsscheibe
- 6, 6.1: Befestigeröffnung
- 7: Drehmitnahmekontur
- 8: Negativstruktur
- 9, 9.1: Verklammerungsstrukturierung
- 10: äußerer Scheibenbereich
- 11: Scheibenbereich
- 12: innerer Scheibenbereich
- 13: Linie
- 14: Linie
- S: Scheitel
- a: Abstand

## Patentansprüche

1. Sicherungsscheibe zum Sichern einer Schraubverbindung, wobei die Sicherungsscheibe (2, 3) eine erste Flachseite und eine zweite Flachseite aufweist und wenigstens eine der beiden Flachseiten der Sicherungsscheibe (2, 3) eine durch eine Vielzahl an zur Ausbildung eines Formschlusses mit einem Widerlanger dienenden Radialrippen (R₁, R₂, R₃) bereitgestellte Verklammerungsstrukturierung (9, 9.1) aufweist, **dadurch gekennzeichnet, dass** eine erste Anzahl an Radialrippen (R₁) eine erste Höhe und eine zweite Anzahl an Radialrippen (R₂, R₃) eine zweite Höhe aufweisen, wobei die zweite Höhe geringer ist als die erste Höhe, und dass die Radialrippen (R₁) der ersten Anzahl einzeln oder zu mehreren gruppiert durch wenigstens eine Radialrippe (R₂, R₃) der zweiten Anzahl voneinander getrennt sind.

2. Sicherungsscheibe nach Anspruch 1, **dadurch gekennzeichnet, dass** die zweite Anzahl an Radialrippen (R₂, R₃) sich aus Radialrippen mit wenigstens zwei unterschiedlichen Höhen zusammensetzt.

3. Sicherungsscheibe nach Anspruch 2, **dadurch gekennzeichnet, dass** in Umfangsrichtung der Sicherungsscheibe (2, 3) gesehen ausgehend von einer Radialrippe (R₁) der ersten Anzahl eine Radialrippe der zweiten Anzahl mit der größten Höhe und anschließend eine mit demgegenüber der nächst geringeren Höhe folgt, bis aus der zweiten Anzahl der Radialrippen (R₂, R₃) eine Radialrippe (R₃) mit der geringsten Höhe die vorbeschriebene Abfolge von Radialrippen (R₁, R₂, R₃) mit abnehmender Höhe beendet.

4. Sicherungsscheibe nach Anspruch 3, **dadurch gekennzeichnet, dass** die Abfolge an Radialrippen (R₁, R₂, R₃) sich ändernder Höhe in beide Umfangsrichtungen der Sicherungsscheibe (2, 3) gleich ist.

5. Sicherungsscheibe nach einem der Ansprüche 1 bis 4, **dadurch gekennzeichnet, dass** die Radialrippen (R₁, R₂, R₃) mit asymmetrischer Querschnittsgeometrie ausgeführt sind, wobei die steilere Flanke in die gewünschte Sicherungsrichtung weist.

6. Sicherungsscheibe nach einem der Ansprüche 1 bis 5, **dadurch gekennzeichnet, dass** die Materialstärke der Sicherungsscheibe (2) in einem radial äußeren Scheibenbereich (10) größer ist als in einem radial inneren Scheibenbereich (12).

7. Sicherungsscheibe nach Anspruch 6, **dadurch gekennzeichnet, dass** die Materialstärke der Sicherungsscheibe (2) von dem axial äußeren Scheibenbereich (10) zu dem radial innenliegenden Scheibenbereich (12) kontinuierlich abnimmt.

8. Sicherungsscheibe nach einem der Ansprüche 1 bis 7, **dadurch gekennzeichnet, dass** die Sicherungsscheibe (2, 3) eine Keilsicherungsscheibe ist und dass die der Flachseite mit der Verklammerungsstrukturierung (9, 9.1) gegenüberliegende Flachseite die Keilflächen trägt.

9. Sicherungsscheibe nach Anspruch 8, **dadurch gekennzeichnet, dass** die Sicherungsscheibe (2, 3) zusammen mit einer weiteren, als Keilsicherungsscheibe ausgebildeten Scheibe (3, 2) ein Keilsicherungsscheibenpaar (1) bildet, welche beiden Keilsicherungsscheiben (2, 3) mit ihren Keilflächen zusammenwirkend angeordnet sind.

10. Sicherungsscheibe nach Anspruch 9, **dadurch gekennzeichnet, dass** die beiden Sicherungsscheiben (2, 3) einen unterschiedlichen Außendurchmesser aufweisen und die im Durchmesser größere Sicherungsscheibe (2) an ihrer von der im Außendurchmesser kleineren Sicherungsscheibe (3) wegweisenden Flachseite die Verklammerungsstrukturierung (9) trägt.

11. Sicherungsscheibe nach Anspruch 10, **dadurch gekennzeichnet, dass** die Sicherungsscheibe (2) mit dem größeren Außendurchmesser radial außenseitig durch eine Drehmitnahmekontur (7) zur Drehmomentabstützung eines Spannwerkzeuges strukturiert ist.

## Claims

1. A lock washer for securing a screw connection, wherein the lock washer (2, 3) has a first flat side and a second flat side and at least one of the two flat sides of the lock washer (2, 3) has an interlock structure (9, 9.1) provided by a plurality of radial ribs (R₁, R₂, R₃) so as to establish a form-locking connection to an abutment, **characterized in that** a first number of radial ribs (R₁) have a first height and a second number of radial ribs (R₂, R₃) have a second height, wherein the second height is smaller than the first height, and **in that** the radial ribs (R₁) of the first number are separated from one another, individually or in groups, by at least one radial rib (R₂, R₃) of the second number.

2. The lock washer according to claim 1, **characterized in that** the second number of radial ribs (R₂, R₃) consists of radial ribs with at least two different heights.

3. The lock washer according to claim 2, **characterized in that**, viewed in the circumferential direction of the lock washer (2, 3), starting from a radial rib (R₁) of the first number, a radial rib of the second number with the greatest height follows, and then one with the next lower height compared to it, until a radial rib (R₃) of the second number of radial ribs (R₂, R₃) with the lowest height completes the aforementioned sequence of radial ribs (R₁, R₂, R₃) with decreasing height.

4. The lock washer according to claim 3, **characterized in that** the sequence of radial ribs (R₁, R₂, R₃) of changing height is the same in both circumferential directions of the lock washer (2, 3).

5. The lock washer according to any one of claims 1 to 4, **characterized in that** the radial ribs (R₁, R₂, R₃) are designed with an asymmetric cross-sectional geometry, wherein the steeper flank points in the desired locking direction.

6. The lock washer according to any one of claims 1 to 5, **characterized in that** the material thickness of the lock washer (2) is greater in a radially outer washer region (10) than in a radially inner washer region (12).

7. The lock washer according to claim 6, **characterized** inthat the material thickness of the lock washer (2) decreases continuously from the axially outer washer region (10) to the radially inner washer region (12).

8. The lock washer according to any one of claims 1 to 7, **characterized in that** the lock washer (2, 3) is a wedge lock washer and that the flat side opposite the flat side with the interlock structure (9, 9.1) has the wedge surfaces.

9. The lock washer according to claim 8, **characterized in that** the lock washer (2, 3) together with a further washer (3, 2) designed as a wedge lock washer forms a pair of wedge lock washers (1), which two wedge lock washers (2, 3) are arranged to interact with their wedge surfaces.

10. The lock washer according to claim 9, **characterized in that** the two lock washers (2, 3) have different outer diameters and the lock washer (2) with the larger diameter has the interlock structure (9) on its flat side facing away from the lock washer (3) with the smaller outer diameter.

11. The lock washer according to claim 10, **characterized in that** the lock washer (2) with the larger outer diameter is structured radially on the outside by a rotational engagement contour (7) for torque support of a clamping tool.

## Revendications

1. Rondelle de blocage destinée à sécuriser un assemblage vissé, dans laquelle la rondelle de sécurité (2, 3) présente une première face plane et une seconde face plane, et au moins l'une des deux faces planes de la rondelle de sécurité (2, 3) présente une structuration d'accrochage (9, 9.1), réalisée par une pluralité de nervures radiales (R₁, R₂, R₃) servant à former une complémentarité de forme avec une pièce de réaction, **caractérisée en ce qu'un** premier nombre de nervures radiales (R₁) présente une première hauteur et un second nombre de nervures radiales (R₂, R₃) présente une seconde hauteur, dans laquelle la seconde hauteur est inférieure à la première hauteur, et **en ce que** les nervures radiales (R₁) du premier nombre sont séparées les unes des autres, individuellement ou en groupes de plusieurs, par au moins une nervure radiale (R₂, R₃) du second nombre.

2. Rondelle de blocage selon la revendication 1, **caractérisée en ce que** le second nombre de nervures radiales (R₂, R₃) est constitué de nervures radiales avec au moins deux hauteurs différentes.

3. Rondelle de blocage selon la revendication 2, **caractérisée en ce que,** considérée dans le sens circonférentiel de la rondelle de blocage (2, 3), à partir d'une nervure radiale (R₁) du premier nombre, est disposée une nervure radiale du second nombre avec la plus grande hauteur, puis une nervure radiale avec la hauteur immédiatement inférieure à celle-ci, jusqu'à ce qu'une nervure radiale (R₃) en provenance du second nombre de nervures radiales (R₂, R₃), avec la plus faible hauteur, termine la succession précédemment décrite de nervures radiales (R₁, R₂, R₃) de hauteur décroissante.

4. Rondelle de blocage selon la revendication 3, **caractérisée en ce que** la succession de nervures radiales (R₁, R₂, R₃) de hauteur variable est identique dans les deux sens circonférentiels de la rondelle de blocage (2, 3).

5. Rondelle de blocage selon l'une quelconque des revendications 1 à 4, **caractérisée en ce que** les nervures radiales (R₁, R₂, R₃) sont réalisées avec une géométrie de section transversale asymétrique, dans laquelle le flanc le plus raide est orienté dans la direction de blocage souhaitée.

6. Rondelle de blocage selon l'une quelconque des revendications 1 à 5, **caractérisée en ce que** l'épaisseur de matériau de la rondelle de blocage (2) est plus importante dans une région de rondelle radialement extérieure (10) que dans une région de rondelle radialement intérieure (12).

7. Rondelle de blocage selon la revendication 6, **caractérisée en ce que** l'épaisseur de matériau de la rondelle de blocage (2) diminue de façon continue de la région de rondelle radialement extérieure (10) vers la région de rondelle radialement intérieure (12).

8. Rondelle de blocage selon l'une quelconque des revendications 1 à 7, **caractérisée en ce que** la rondelle de blocage (2, 3) est une rondelle de blocage à effet de coin et **en ce que** la face plane opposée à la face plane avec la structuration d'accrochage (9, 9.1) porte les surfaces en coin.

9. Rondelle de blocage selon la revendication 8, **caractérisée en ce que** la rondelle de blocage (2, 3) forme, conjointement avec une autre rondelle (3, 2) réalisée sous la forme d'une rondelle de blocage à effet de coin, une paire de rondelles de blocage à effet de coin (1), lesquelles deux rondelles de blocage à effet de coin (2, 3) sont disposées de sorte que leurs surfaces en coin coopèrent entre elles.

10. Rondelle de blocage selon la revendication 9, **caractérisée en ce que** les deux rondelles de blocage (2, 3) présentent des diamètres extérieurs différents et **en ce que** la rondelle de blocage (2) ayant le plus grand diamètre extérieur porte la structuration d'accrochage (9) sur sa face plane tournée à l'opposé de la rondelle de blocage (3) ayant le plus petit diamètre extérieur.

11. Rondelle de blocage selon la revendication 10, **caractérisée en ce que** la rondelle de blocage (2) avec le plus grand diamètre extérieur est pourvue, sur son côté radialement extérieur, d'un profil d'entraînement en rotation (7) destiné à la reprise de couple d'un outil de serrage.
